# EUROPEAN PATENT APPLICATION

(11) **EP 4 286 971 A1**
(43) Date of publication of application: **06.12.2023**
(21) Application number: 22020592.6
(22) Date of filing: 04.12.2022
(51) Int. Cl.: G05D 1/00

(54) **GROUND CONTROL STATION**

(30) Priority: 18.05.2022 US 202217663840
(71) Applicant: Microavia International Limited, D04 Dublin 4 (IE)
(72) Inventor: KOMAROV, Andrey, Saint Petersburg 196240 (RU); BIRIUK, Ivan, Saint Petersburg 194017 (RU); KOTOV, Denis, Saint Petersburg 198095 (RU); MAKSIMOV, Denis, Saint Petersburg 197372 (RU)
(74) Representative: Ivanov, Ivan Nikolov

(57) **Abstract**

A Ground Control Station (GCS) controls a plurality of Unmanned Aerial Vehicles (UAVs). The GCS comprises a web server for providing a gateway to communicate with the GCS. A UAV operation module receives data associated with flight programs and parameters associated with UAVs. A radio communication module is configured to establish an uplink communication channel with UAVs to transmit to radio messages and commands UAVs over the established communication channel. A local network provides data communication between UAVs and the UAV operation module to enable uploading of flight programs from the UAV operation module to the UAVs and downloads data associated with a parameter from UAVs to the UAV operation module.

## Description

### Field of the Invention

1. The present disclosure generally relates to unmanned aerial vehicles or drones. In particular the present disclosure relates to a Ground Control Station (GCS) for controlling a plurality of Unmanned Aerial Vehicles (UAVs) and a method of use.

### Background of the Invention

2. During a drone show involving hundreds of drones, high-precision navigation of the drones is imperative, and it requires synchronization so that each drone receives the same data about local reference points and achieves the accuracy of the positioning of the drones relative to each other. If each drone uses its own navigation module for high precision navigation correction, then the positioning error of the drones relative to the local reference point or relative to each other can be several times greater. Positioning error is not desired because it results in unsafe conditions.

3. Another task associated with a drone show includes central management of the drones. More specifically, central management includes monitoring the status of drones, sending flight tasks, and collecting telemetry data from the drones to track and correct the flight of each drone. These tasks depend on stable and secure communication channels for the drones, including radio channels and wireless communication channels, regardless of the availability of mobile or satellite communications.

4. There is a need for an improved ground control station configured for more safely and efficiently performing the different tasks associated with drone shows.

### Summary of the Invention

5. A Ground Control Station (GCS) controls a plurality of Unmanned Aerial Vehicles (UAVs). The GCS comprises a web server for providing a gateway to a user device to communicate with the GCS. A processing unit and a storage medium is coupled to the processing unit. The storage medium is configured to store data associated with at least one flight program and at least one parameter associated with the plurality of UAVs. A UAV operation module is communicatively coupled to the processing unit and the storage medium. The UAV operation module is configured to receive data associated with the at least one flight program and the at least one parameter associated with the plurality of UAVs. A radio communication module is communicatively coupled to a UAV operation module. The radio communication module is configured to establish an uplink communication channel with individual UAVs. The module transmits one or more radio messages and one or more commands to individual UAVs over the established communication channel. A network access point is communicatively coupled to the UAV operation module. The network access point is configured to provide a local network to the plurality of UAVs for establishing data communication between the plurality of UAVs and the UAV operation module to upload a flight program from the UAV operation module to individual UAVs. Then data associated with a parameter from the UAVs is downloaded to the UAV operation module.

6. In an alternative embodiment, the GCS comprises a GPS module to provide the UAV operation module data associated with location coordinates of a location of deployment of the GCS for usage as a local reference point for UAVs.

7. In an alternative embodiment, a parameter associated with the UAVs includes location coordinates of individual UAVs, SOC of UAV batteries, and UAV health parameters of individual UAVs.

8. The GCS controls UAVs and comprises a web server for providing a gateway to a user device to communicate with the GCS. The GCS further comprises a processing unit and a storage medium coupled to the processing unit, wherein the storage medium is configured to store data associated with at least one flight program and at least one parameter associated with the UAVs. A UAV operation module is communicatively coupled to the processing unit and the storage medium. The UAV operation module is configured to receive data associated with the at least one flight program and the at least one parameter associated with the plurality of UAVs. A network communication module configured to communicate with a LoRa^{®®} communication module to establish an uplink communication channel with each UAV in the plurality of UAVs; and transmit to one or more message and one or more commands to each UAV in the plurality of UAVs over the established communication channel. The network communication module is further configured to communicate with a wireless network module to provide a local network to the plurality of UAVs for establishing data communication between the plurality of UAVs and the UAV operation module to upload the at least one flight program from the UAV operation module to the plurality of UAVs; and download the data associated with the at least one parameter from the plurality of UAVs to the UAV operation module.

9. In an alternative embodiment, the GCS further comprises a navigation correction module configured to communicate with the plurality of UAVs and the network communication module for delivering synchronized GPS corrections to the plurality of UAVs.

10. The present subject matter further envisages a method for controlling a plurality of UAVs. The method comprises the steps of: providing a gateway to a user device to communicate with at least one GCS; storing and accessing data associated with at least one flight program and at least one parameter associated with the plurality of UAVs; receiving, at a UAV operation module of the at least one GCS, data associated with the at least one flight program and the at least one parameter associated with the plurality of UAVs; establishing an uplink communication channel with each UAV in the plurality of UAVs for transmitting one or more message and one or more commands to each UAV in the plurality of UAVs over the established communication channel; providing a local network to the plurality of UAVs for establishing data communication between the plurality of UAVs and the UAV operation module for uploading the at least one flight program from the UAV operation module to the plurality of UAVs, and downloading the data associated with the at least one parameter from the plurality of UAVs to the UAV operation module.

11. In an alternative embodiment, the step of establishing the uplink communication channel with each UAV in the plurality of UAVs is facilitated via at least one of a radio communication module or a LoRa^{®} communication module. LoRa^{®} can be described as the physical layer or the wireless modulation utilized to create a long-range communication link. Older wireless systems use frequency shifting keying (FSK) modulation as the physical layer. LoRa^{®} is based on chirp spread spectrum modulation, which maintains the same low power characteristics as FSK modulation but significantly increases the communication range.

12. In an alternative embodiment, the step of providing the local network to the plurality of UAVs for establishing data communication between the plurality of UAVs and the UAV operation module is facilitated via at least one of a network access point and a wireless network provider.

13. In an alternative embodiment, at least one GCS is a virtual GCS.

14. In an alternative embodiment, the method further comprises the step of deploying a pair of GCSs, wherein each GCS in the pair of GCSs is configured to communicate with the other GCS for facilitating control and synchronization between the plurality of UAVs controlled by each GCS in the pair of GCSs.

15. In an alternative embodiment, the method further comprises the step of deploying a cluster of GCSs, wherein each GCS in the cluster of GCSs is configured to communicate with at least one another GCS for facilitating control and synchronization between the plurality of UAVs controlled by each GCS in the cluster of GCSs.

### Description of the Drawings

16. Figure 1A illustrates a block diagram of a Ground Control Station (GCS) for controlling a plurality of Unmanned Aerial Vehicles (UAVs), in accordance with an embodiment of the present subject matter.
17. Figure 1B illustrates a perspective view of the GCS, in accordance with an embodiment of the present subject matter.
18. Figure 2 illustrates a block diagram of a GCS for controlling a plurality of UAVs, in accordance with another embodiment of the present subject matter.
19. Figure 3 illustrates a block diagram of a GCS for controlling a plurality of UAVs, in accordance with another embodiment of the present subject matter.
20. Figure 4 illustrates a block diagram of a GCS system for controlling a plurality of UAVs, in accordance with another embodiment of the present subject matter.
21. Figure 5 illustrates a block diagram of a GCS system for controlling a plurality of UAVs, in accordance with another embodiment of the present subject matter.
22. Figure 6 illustrates a block diagram of a method for controlling a plurality of UAVs, in accordance with an embodiment of the present subject matter.

### Detailed Description

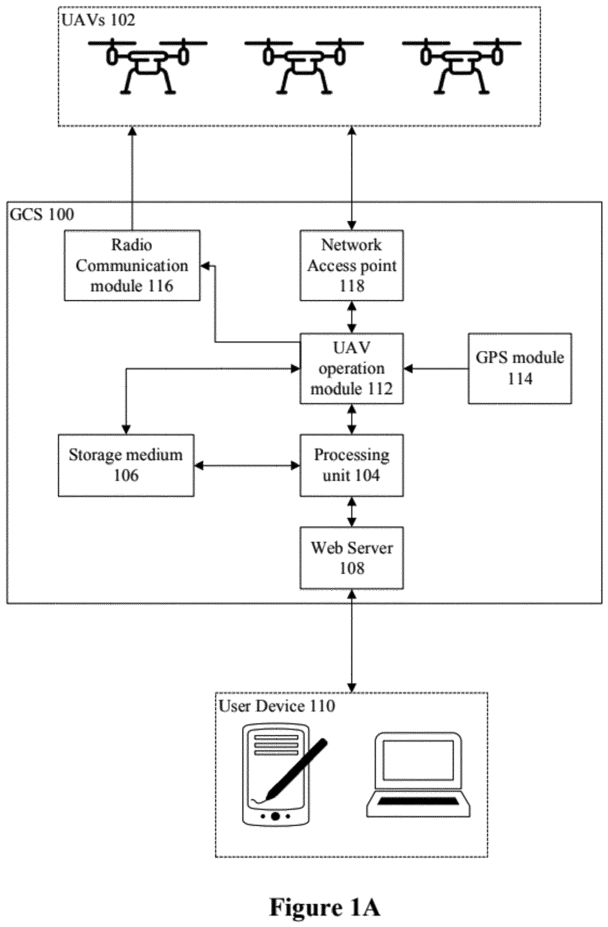

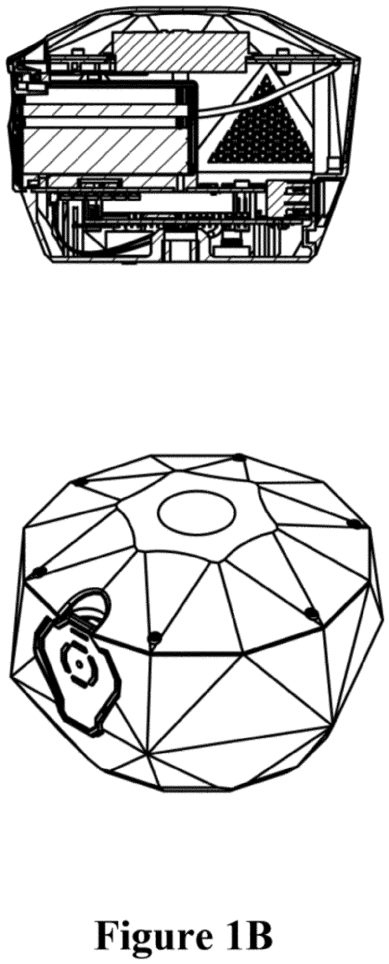

23. Figure 1A illustrates a block diagram of a Ground Control Station (GCS) 100 for controlling a plurality of Unmanned Aerial Vehicles (UAVs) 102, in accordance with an embodiment of the present subject matter. Figure 1B illustrates a perspective view of the GCS 100. The GCS 100 includes a bus, an interconnect, or other communication mechanism for communicating information, and a processing unit 104, commonly in the form of an integrated circuit, coupled to the bus for processing information and for executing the computer executable instructions. The processing unit 104 includes a memory, such as a Random Access Memory (RAM) or other dynamic storage device, coupled to the bus for storing information and instructions to be executed by the processing unit 104. In one embodiment, the memory also is used for storing temporary variables or other intermediate information during execution of instructions to be executed by the processing unit 104. The control station further includes a Read Only Memory (ROM) (or other non-volatile memory), or other static storage device coupled to the bus for storing static information and instructions for the processing unit 104. In one embodiment, a storage medium 106 is a hard disk drive (HDD) for reading from and writing to a hard disk, or a solid-state drive (SSD) or an SD card, and the like, is coupled to the bus for storing information and instructions.

24. The GCS 100, in accordance with an embodiment of the present subject matter, includes a web server 108. The web server 108 is configured to provide a communication gateway to a user device 110 to communicate with the GCS 100. The web server 108 is configured to provide a web interface for the user to interact with the GCS 100, in accordance with an embodiment of the present subject matter.

25. In accordance with an embodiment of the present subject matter, the web server 108 is communicatively coupled to the processing unit 104. The instructions that are received at the web server 108 are processed by the processing unit 104 for further action, in accordance with one implementation. In one implementation, the storage medium 106 includes the instructions that are to be executed by the processing unit 104 in response to the inputs from the web server 108 and to further operate the GCS 100 accordingly.

26. The GCS 100 further comprises a UAV operation module 112. The UAV operation module 112 is communicatively coupled to the processing unit 104 and the storage medium 106. The UAV operation module 112 is configured to receive data associated with the at least one flight program and the at least one parameter associated with the plurality of UAVs 102. More specifically, the flight program is the flight program that is selected by the user via the web server 108, and the at least one parameter is one or more parameters associated with the plurality of UAVs 102 that require checking before executing any flight tasks, such as for example, SOC of UAV batteries, location coordinates of the UAVs, data associated with UAV health parameters for each UAV for ensuring a smooth and interruption free operation of the UAVs.

27. One exemplary application of the GCS 100 is during drone shows or visual performances executed by plurality of UAVs. In such a scenario, the GCS 100 is required to control hundreds of UAVs simultaneously. In such applications, it is imperative to pre-check all the battery and health related parameters of the participating UAVs and have the corresponding data pre-fed into the storage medium 106 before the start of the visual performance or drone show for ensuring a smooth and interruption free operation of the UAVs during the drone show.

28. For the application of drone shows, one aspect for ensuring a glitch free performance of the UAVs is ensuring high precision synchronized movements of the plurality of UAVs 102. Using the individual navigation modules of the plurality of UAVs 102 for achieving this high precision synchronized movements cannot be viable because if each UAV uses a high-precision navigation correction from its own navigation module, then the positioning error of the UAVs relative to a local reference point or relative to each other is several times bigger. In another implementation, high precision navigation is obtained from external GPS services that are available at the deployment location area of the GCS 100. To this end, the present subject matter envisages navigating the plurality of UAVs 102 while using a deployment location coordinate of the GCS 100 as a local reference point, with respect to which navigation correction of the plurality of UAVs 102 is performed for achieving the accuracy of the positioning of the UAVs relative to each other.

29. As such, the GCS 100 further comprises a GPS module 114. The GPS module 114 is communicatively coupled to the UAV operation module 112 and configured to provide the data associated with the deployment location, such as the location coordinates of the deployment location of the GCS 100 for usage as the local reference point about which the navigation correction of the plurality of UAVs 102 is to be performed.

30. For controlling the plurality of UAVs 102, communication channels are required to be established between the GCS 100 and the plurality of UAVs 102. To this end, the present subject matter envisages the use of a radio communication module 116 and a network access point 118.

31. The GCS 100 comprises the radio communication module 116 that is communicatively coupled to the UAV operation module 112. The radio communication module 116 is configured to establish an uplink communication channel with each UAV in the plurality of UAVs 102 and transmit to one or more messages and one or more commands to each UAV in the plurality of UAVs 102 over the established communication channel. The transmitted commands include commands associated with activation and deactivation of the UAVs, navigation correction commands, repositioning commands during a drone show, and so on.

32. The GCS 100 comprises the network access point 118. The network access point 118 is configured to provide a local network to the plurality of UAVs for establishing data communication between the plurality of UAVs 102 and the UAV operation module 112. The data communication between the plurality of UAVs 102 and the UAV operation module 112 is provided to upload the at least one flight program from the UAV operation module 112 to the plurality of UAVs 102, and to download the data associated with the at least one parameter from the plurality of UAVs 102 to the UAV operation module 112.

33. More specifically, once the data associated with the flight program is uploaded to the UAVs via the network access point 118, corresponding activation commands, navigation commands, or repositioning commands are transmitted to the plurality of UAVs 102 simultaneously via the radio communication module 116. Furthermore, during the course of the flight program, data associated with the location coordinates as well as battery and health parameters of each of the plurality of UAVs 102 is continuously downloaded via the network access point 118 for the UAV operation module 112 so that the UAV operation module 112 further analyzes the same for computing error in positioning of the UAVs as well as identifying which UAVs need to be replaced mid-way based on the analysis battery and health parameters. Accordingly, the UAV operation module 112 generates the repositioning commands and/or replacement commands that are then transmitted to the relevant UAVs from the plurality of UAVs 102 via the radio communication module 116. In one exemplary implementation, such a process is iteratively carried out by the UAV operation module 112 throughout the entire duration of the drone show or at fixed intervals throughout the duration of the drone show.

34. An advantageous aspect of the GCS 100 is that GCS 100 does not rely on mobile connectivity or satellite communication. The communication means used in the GCS 100, i.e., the radio communication module 116 and the network access point 118 is deployed at the deployment location of the GCS 100. Therefore, this allows the usage of GCS 100 in remote locales as well. Another advantageous aspect of the GCS 100 is its portable and easy to deploy construction, which can be seen in Figure 1B.

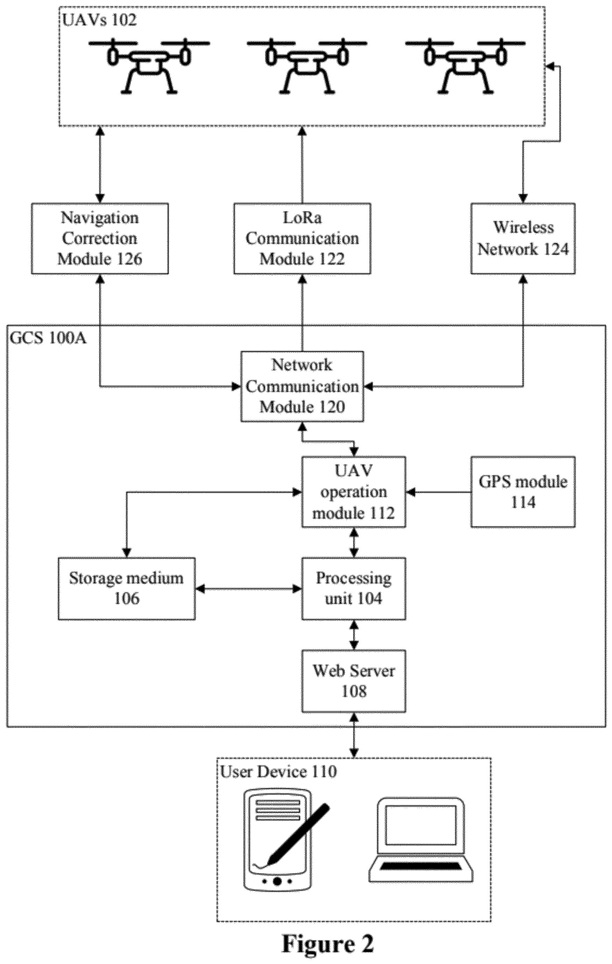

35. Figure 2 illustrates a block diagram of a GCS 100A for controlling a plurality of UAVs 102, in accordance with another embodiment of the present subject matter. The construction, configuration, and operation of the GCS 100A is identical to that of GCS 100 with the difference being the modes of communication employed between the plurality of UAVs and the GCS 100A. As such, the description of identical features of the GCS 100 and the GCS 100A has not been repeated for the sake of brevity of the present disclosure. Furthermore, identical components of the GCS 100A and GCS 100 are referenced via like numerals for the sake of simplicity and readability.

36. Referring to Figure 2, the GCS 100A comprises a network communication module 120 that is communicatively coupled to the UAV operation module 112. The GCS 100A further comprises a LoRa^{®} communication module 122, a wireless network 124, and a navigation correction module 126.

37. The LoRa^{®} communication module 122 and the wireless network 124 are the communication channels that are provided in the GCS 100A for communicating with the plurality of UAVs 102. In one embodiment, the wireless network 124 is provided by mobile communication networks, e.g., LTE, GPRS, and the like. The LoRa^{®} communication module 122 is configured to employ the services of loT network providers. It is to be noted that LoRa^{®} communication protocol is a wireless protocol especially configured for long-range and low-power communications.

38. More specifically, the LoRa^{®} communication module 122 is configured to establish an uplink communication channel with each UAV in the plurality of UAVs 102 and transmit to one or more message and one or more commands to each UAV in the plurality of UAVs 102 over the established communication channel. The transmitted commands include commands associated with activation and deactivation of the UAVs, navigation correction commands, repositioning commands during a drone show, and so on.

39. The wireless network 124 is used to provide a local network to the plurality of UAVs for establishing data communication between the plurality of UAVs 102 and the UAV operation module 112. The data communication between the plurality of UAVs 102 and the UAV operation module 112 is provided to upload the at least one flight program from the UAV operation module 112 to the plurality of UAVs 102, and to download the data associated with the at least one parameter from the plurality of UAVs 102 to the UAV operation module 112.

40. The GCS 100A further comprises the navigation correction module 126 configured to communicate with the plurality of UAVs 102 and the network communication module 120 to facilitate real time location synchronization of the plurality of UAVs 102.

41. An advantageous aspect of the GCS 100A is that it can make use of the network availability in urban areas for conducting events such as drone shows. As such, the GCS 100A does not require the installation of the radio communication module 116 and the network access point 118.

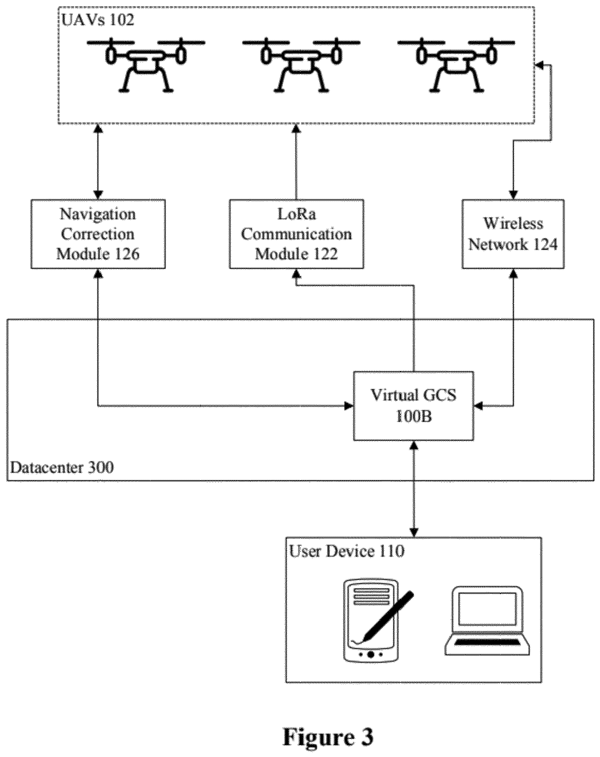

42. Figure 3 illustrates a block diagram of a GCS 100B for controlling a plurality of UAVs 102, in accordance with another embodiment of the present subject matter. The features, configuration, and operation of the GCS 100B is identical to that of GCS 100A with the difference being that the GCS 100B itself is a virtual machine configured at a datacenter 300. As such, the description of identical features of the GCS 100A and the GCS 100B has not been repeated for the sake of brevity of the present disclosure.

43. An advantageous aspect of the GCS 100B is that one does not need to exert the manual effort required in setting up the ground control station at the location of the drone show. For example, in urban areas having ample network availability, the GCS 100B employs the use of LoRa^{®} communication module 122 and the wireless network 126 for facilitating communication between the virtual GCS 100B and the plurality of UAVs 102, whereas the web server 108 is used to allow a user device 110 to communicate with the virtual GCS 100B for controlling the plurality of UAVs.

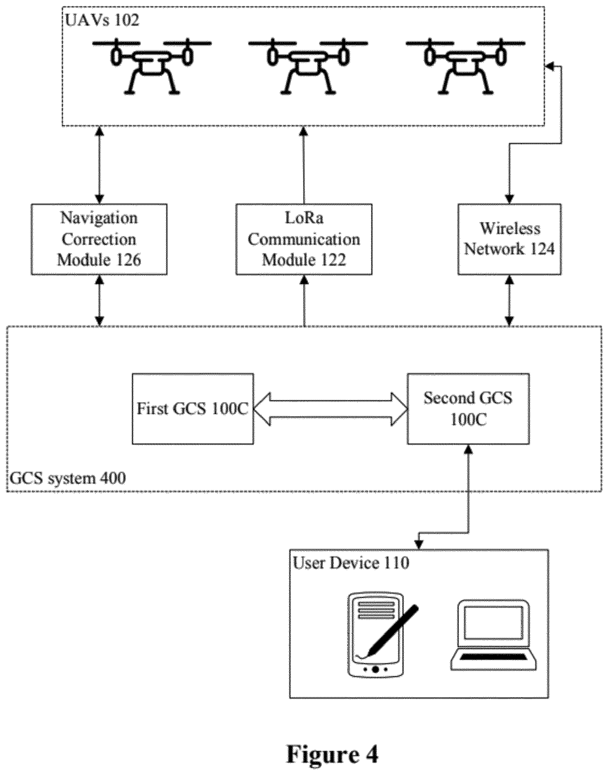

44. Figure 4 illustrates a block diagram of a GCS system 400 for controlling a plurality of UAVs 102, in accordance with another embodiment of the present subject matter. In the instant embodiment, the GCS system 400 employs the usage of a pair of GCSs 100C. More specifically, the pair of GCSs 100C are configured to communicate with each other for controlling and synchronizing the movement of plurality of UAVs 102. More specifically, such an embodiment of the GCS system 400 is implemented when the number of UAVs required for the drone show exceeds the controlling capacity of a single GCS. It is to be noted that the features, configuration, and operation of the GCS 100C is similar to GCS 100, GCS 100A, or GCS 100B. Therefore, the description of the same is not repeated herein for the sake of brevity of the present disclosure.

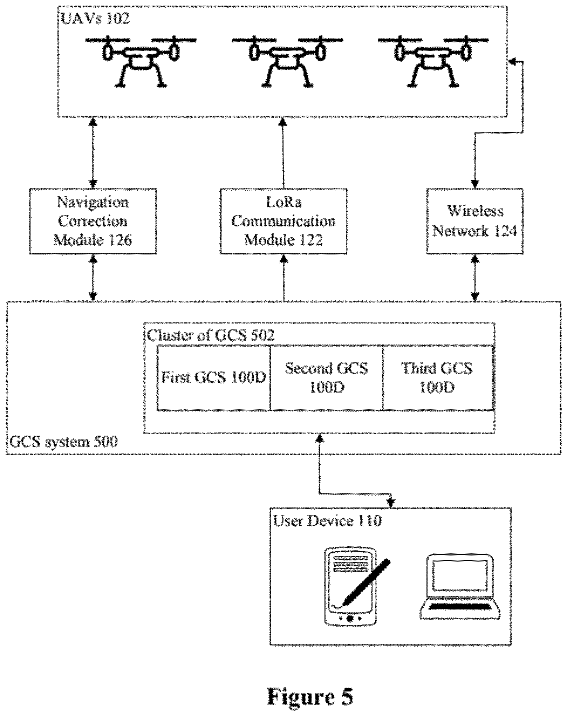

45. Figure 5 illustrates a block diagram of a GCS system 500 for controlling a plurality of UAVs 102, in accordance with another embodiment of the present subject matter. Similar to GCS system 400, the GCS system 500 employs the usage of a cluster of GCSs 502, wherein the cluster of GCS 502 includes a plurality of GCSs 100D. The plurality of GCSs 100D are configured to communicate with each other for controlling and synchronizing the movement of plurality of UAVs 102. Such an embodiment of the GCS system 500 is implemented when the number of UAVs required for the drone show exceeds the controlling capacity of a pair of GCSs. It is to be noted that the features, configuration, and operation of the GCS 100D is similar to GCS 100, GCS 100A, GCS 100B, or GCS 100D. Therefore, the description of the same is not repeated herein for the sake of brevity of the present disclosure.

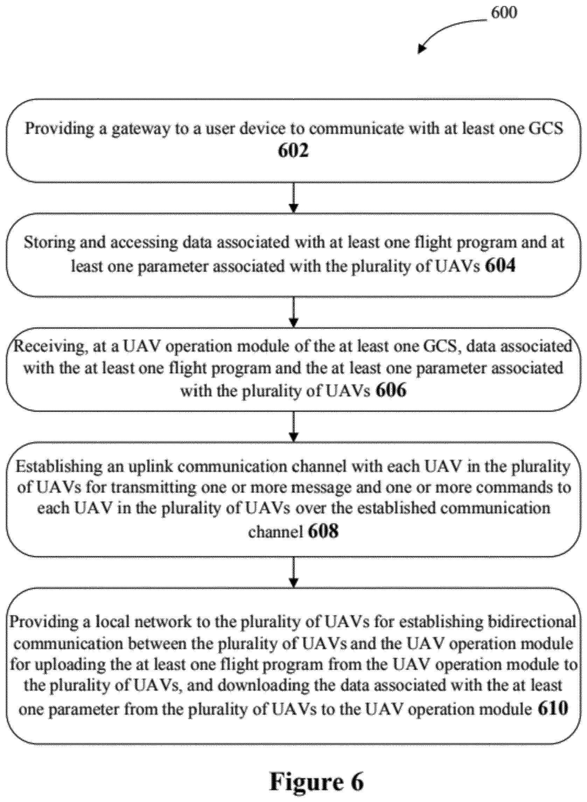

46. Figure 6 illustrates a block diagram of a method 600 for controlling a plurality of UAVs 102, in accordance with an embodiment of the present subject matter. The order in which the method 600 is described is not intended to be construed as a limitation, and any number of the described method blocks can be combined in any order to implement the method or any alternative methods. Additionally, individual blocks can be deleted from the method without departing from the spirit and scope of the subject matter described herein. Furthermore, the method can be implemented in any suitable hardware, software, firmware, or combination thereof.

47. At block 602, the method 600 comprises the step of providing a gateway to a user device to communicate with at least one GCS. In accordance with one embodiment of the present subject matter, the web server 108 is provided at the at least one GCS for allowing a user to communicate therewith via a user device 110. The user device, in accordance with one embodiment, is any smart device including, but not limited to, smartphones, computers, tablets, and the like. More specifically, the web server 108 provides a web interface to the user with which the user interacts using the user device 110 for providing required instructions to control the plurality of UAVs 102.

48. At block 604, the method 600 comprises the step of storing and accessing data associated with at least one flight program and at least one parameter associated with the plurality of UAVs. In one embodiment, GCS includes a processing unit and a storage medium. The storage medium is configured to store instructions for the processing unit for operating the GCS along with the data associated with different flight programs and different parameters associated with the plurality of UAVs. As mentioned previously, these parameters include SOC of UAV batteries, location coordinates of the UAVs, health parameters of the UAV and the like.

49. At block 606, the method 600 comprises the step of receiving, at a UAV operation module 112 of the at least one GCS, data associated with the at least one flight program and the at least one parameter associated with the plurality of UAVs 102. More specifically, the flight program is selected by the user via the web server 108, and the details of the flight program are pre-fed to the storage medium 106, as mentioned previously.

50. At block 608, the method 600 comprises the step of establishing an uplink communication channel with each UAV in the plurality of UAVs for transmitting one or more messages and one or more commands to each UAV in the plurality of UAVs over the established communication channel. In accordance with an embodiment of the present subject matter, based on the selected flight program and the data associated UAV parameters such as SOC of UAV batteries, location coordinates of the UAVs, health parameters of the UAV and the like, the UAV operation module 112 generates commands and messages to be received by the plurality of UAVs 102 for initiating flight of the plurality of UAVs 102 in accordance with the selected flight program. In accordance with one embodiment of the present subject matter, the commands and messages for the plurality of UAVs is transmitted via one of a radio communication module 116 and a LoRa^{®} communication module 122.

51. At block 610, the method 600 comprises the step of providing a local network to the plurality of UAVs for establishing data communication between the plurality of UAVs and the UAV operation module for uploading the at least one flight program from the UAV operation module to the plurality of UAVs, and downloading the data associated with the at least one parameter from the plurality of UAVs to the UAV operation module. While the commands such as activation commands, repositioning commands are sent by either the radio communication module or the LoRa^{®} communication module, data associated with flight programs is uploaded to the plurality of UAVs via the local network or wireless connection channel. Furthermore, the data associated with various other parameters of the UAVs is downloaded to the UAV operation module 112 via the local network as well. The downloaded data allows the UAV operation module 112 to control the UAVs by analyzing which UAVs need to be repositioned and which ones need replacement mid-way for presenting a glitch free drone show. In accordance with one embodiment, the local network is provided to the plurality of UAVs for establishing data communication between the plurality of UAVs and the UAV operation module via at least one of a network access point and a wireless network provider (LTE, GPRS, and the like).

52. In an alternative embodiment, the method 600 includes deploying a pair of GCSs, wherein each GCS in the pair of GCSs is configured to communicate with the other GCS for facilitating control and synchronization between the plurality of UAVs controlled by each GCS in the pair of GCSs. In accordance with the instant embodiment, the pair of GCSs is configured to detect that if one GCS fails, the other GCS sends a command to the plurality of UAVs to switch communication to the second active and operational GCS to proceed working without any delay.

53. In an alternative embodiment, the method 600 deploying a cluster of GCSs, wherein each GCS in the cluster of GCSs is configured to communicate with at least one another GCS for facilitating control and synchronization between the plurality of UAVs controlled by each GCS in the cluster of GCSs.

54. One exemplary operational scenario for the GCS 100 operated in accordance with method 600 has been described hereafter. With regards to the GCS 100, the first and foremost step is the deployment of the GCS 100 at the desired location. An advantageous aspect of the GCS 100 is that it is configured in an easily portable and deployable construction, as depicted in FIGURE 1B. After the deployment of the GCS 100, the same is activated, which then turns on the GCS 100 along with its web server 108. The web server 108, which is available on the local network provided by the network access point 118, provides a web interface to the user device 110, via which the user interacts with the GCS 100. The user then selects a flight program, in response to which the UAVs are turned on using the radio communication module 116 of the GCS 100. After the UAVs are activated, connection commands are sent to the UAVs over the wireless network. The flight program selected by the user on the web server is then uploaded for the UAVs to the UAV operation module 112, which then are downloaded to UAVs over the wireless network provided by the network access point 118. In one implementation, the UAV health parameters are pre-fed to the storage medium 106 for analysis via the UAV operation module 112 to compute the readiness of the UAVs to perform the flight program. In another implementation, the UAVs parameters are sent to the UAV operation module 112 in real time so that the same is analyzed for computing readiness of the UAVs to perform different flight tasks in the flight program. After the UAVs health is conclusive, the UAV operation module 112 sends a signal about the start of flight tasks according to the schedule or at the command of the operator. The statues of the UAVs are monitored in real time as the different parameters of the UAVs are downloaded and analyzed by the UAV operation module 112, the results of which are viewed by the operator on the web interface provided by the web server. If necessary, through the GCS 100, the operator can send a command to complete the flight task or make an emergency landing of the UAVs.

## Claims

1. A Ground Control Station (GCS) for controlling a plurality of Unmanned Aerial Vehicles (UAVs), the GCS comprising:
a. a web server for providing a gateway to a user device to communicate with the GCS;
b. a processing unit and a storage medium coupled to the processing unit, wherein the storage medium is configured to store data associated with at least one flight program and at least one parameter associated with the plurality of UAVs;
c. a UAV operation module processed on the processing unit and the storage medium, wherein the UAV operation module is configured to receive data associated with the at least one flight program and the at least one parameter associated with the plurality of UAVs, the UAV operation module further configured to generate commands and select flight program tasks based on user input or data from the plurality of UAVs;
d. a radio communication module communicatively coupled to UAV operation module and configured to:
i. establish an uplink communication channel with each UAV in the plurality of UAVs; and
ii. transmit to one or more radio message and one or more commands to each UAV in the plurality of UAVs over the established communication channel;
e. a network access point communicatively coupled to the UAV operation module, the network access point configured to:
i. provide a local network to the plurality of UAVs for establishing data communication between the plurality of UAVs and the UAV operation module to:
I. upload the at least one flight program from the UAV operation module to the plurality of UAVs; and
II. download the data associated with at least one parameter from the plurality of UAVs to the UAV operation module.

2. The GCS of claim 1, further comprising a GPS module to provide the UAV operation module data associated with location coordinates of a location of deployment of the GCS for usage as a local reference point for the plurality of UAVs.

3. The GCS of claim 1, wherein the at least one parameter associated with the plurality of UAVs includes location coordinates of each UAV in the plurality of UAVs, SOC of UAV batteries, and UAV health parameters of each UAV in the plurality of UAVs.

4. A Ground Control Station (GCS) for controlling a plurality of Unmanned Aerial Vehicles (UAVs), the GCS comprising:
a. a web server for providing a gateway to a user device to communicate with the GCS;
b. a processing unit and a storage medium coupled to the processing unit, wherein the storage medium is configured to store data associated with at least one flight program and at least one parameter associated with the plurality of UAVs;
c. a UAV operation module communicatively coupled to the processing unit and the storage medium, wherein the UAV operation module is configured to receive data associated with the at least one flight program and the at least one parameter associated with the plurality of UAVs, the UAV operation module further configured to generate commands and select flight program tasks based on user input or data from the plurality of UAVs;
d. a network communication module configured to:
i. communicate with a LoRa^{®} communication module to:
I. establish an uplink communication channel with each UAV in the plurality of UAVs; and
II. transmit to one or more message and one or more commands to each UAV in the plurality of UAVs over the established communication channel;
ii. communicate with a wireless network module to:
I. provide a local network to the plurality of UAVs for establishing data communication between the plurality of UAVs and the UAV operation module to:
A. upload the at least one flight program from the UAV operation module to the plurality of UAVs; and
B. download the data associated with at least one parameter from the plurality of UAVs to the UAV operation module.

5. The GCS of claim 4, further comprising a GPS module to provide the UAV operation module data associated with location coordinates of a location of deployment of the GCS for usage as a local reference point for the plurality of UAVs.

6. The GCS of claim 4, wherein the at least one parameter associated with the plurality of UAVs includes location coordinates of each UAV in the plurality of UAVs, SOC of UAV batteries, and UAV health parameters of each UAV in the plurality of UAVs.

7. The GCS of claim 4, further comprising a navigation correction module configured to communicate with the plurality of UAVs and the network communication module to facilitate real time location synchronization of the plurality of UAVs.

8. A method for controlling a plurality of UAVs, the method comprising the steps of:
a. providing a gateway to a user device to communicate with at least one GCS;
b. storing and accessing data associated with at least one flight program and at least one parameter associated with the plurality of UAVs;
c. receiving, at a UAV operation module of the at least one GCS, data associated with the at least one flight program and the at least one parameter associated with the plurality of UAVs;
d. establishing an uplink communication channel with each UAV in the plurality of UAVs for transmitting one or more message and one or more commands to each UAV in the plurality of UAVs over the established communication channel;
e. providing a local network to the plurality of UAVs for establishing data communication between the plurality of UAVs and the UAV operation module for uploading the at least one flight program from the UAV operation module to the plurality of UAVs, and downloading the data associated with the at least one parameter from the plurality of UAVs to the UAV operation module.

9. The method of claim 8, wherein the step of establishing the uplink communication channel with each UAV in the plurality of UAVs is facilitated via at least one of a radio communication module and a LoRa^{®} communication module.

10. The method of claim 8, wherein the step of providing the local network to the plurality of UAVs for establishing data communication between the plurality of UAVs and the UAV operation module is facilitated via at least one of a network access point and a wireless network provider.

11. The method of claim 8, wherein at least one GCS is a virtual GCS.

12. The method of claim 8, further comprising the step of deploying a pair of GCSs, wherein each GCS in the pair of GCSs is configured to communicate with the other GCS for facilitating control and synchronization between the plurality of UAVs controlled by each GCS in the pair of GCSs.

13. The method of claim 8, further comprising the step of deploying a cluster of GCSs, wherein each GCS in the cluster of GCSs is configured to communicate with at least one another GCS for facilitating control and synchronization between the plurality of UAVs controlled by each GCS in the cluster of GCSs.
